# EUROPEAN PATENT APPLICATION

(11) **EP 0 834 543 A1**
(43) Date of publication of application: **08.04.1998**
(21) Application number: 97203058.9
(22) Date of filing: 03.10.1997
(51) Int. Cl.: C10M 105/72, C10M 135/22, C07C 319/16, C07C 319/18, C07C 321/14, C09K 7/00

(54) **Lubricant compositions**

(30) Priority: 04.10.1996 EP 96307282
(71) Applicant: SHELL INTERNATIONALE RESEARCH MAATSCHAPPIJ B.V., 2596 HR Den Haag (NL)
(72) Inventor: Alcock, William George, Ince, Chester CH1 3SH, Cheshire (GB); Heywood, Frederick William, Willaston, South Wirral L64 1TW (GB); McKenna, Eugene Gerard, Brighton 3186, Victoria (AU)

(57) **Abstract**

Compounds of the general formula 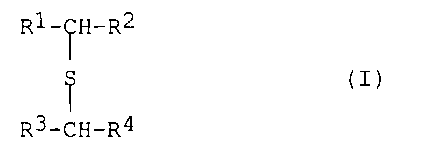 in which
R¹, R², R³ and R⁴, which may be the same or different, each represents an unsubstituted or substituted straight-chain alkyl radical, optionally interrupted by one or more hetero atoms, and R⁴ alternatively may represent a hydrogen atom, such that each group R¹-CH-R² and R³-CH-R⁴ is a chain having from 5 to 31 chain atoms, the number of chain atoms in the group R¹-CH-R² being greater than or equal to the number of chain atoms in the group R³-CH-R⁴, and the total number of carbon atoms in the compound being in the range of from 16 to 70, are useful base fluids for lubricating oil compositions.

## Description

The present invention concerns sulphur-containing compounds and their use as base fluids in lubricating oil compositions.

Lubricating oil compositions have widespread use in a large number of situations but have the largest application in engine lubrication as crankcase lubricating oils. The base fluids (i.e. fluids that have an intrinsic lubricating capacity) originally were mineral oils: hydrocarbon oils obtained from the refining of petroleum. As product specification developed and engines required purer and more temperature stable base fluids, synthetic or synthesised hydrocarbon oils were developed as lubricants.

As lubricants for engines, especially the reciprocating piston engines in general use, the primary objectives are prevention of wear and maintenance of power and efficiency. To that end lubricants are required to lubricate, cool, seal and maintain internal cleanliness. Relevant physical characteristics of the base fluids for engine lubricants are viscosity, oxidation stability, volatility and pour point. Viscosity and oxidation stability are both extremely important: viscosity of the base fluid has a bearing on wear prevention, sealing, oil economy, frictional power loss and deposit formation - too high a viscosity can lead to an increased fuel consumption; oxidation stability (the resistance to deterioration through oxidation) is important as oxidation can promote internal corrosion, increase oil viscosity and create deposit forming materials.

Often conventional base fluids have inadequate properties for use in modern engines, and have to be supplemented by the use of additives in small (up to 5-7% of total weight of the lubricant) amounts. Additives impart one or more specific properties to the base lubricating oil but cannot generally function as base fluids themselves.

Published in 1938, United States Patent Specification No. 2 110 281 proposed the use of certain sulphur-bearing compounds, sulphides and disulphides, as extreme-pressure additives for lubricants. The sulphide forms are of the general formula

R―S―R₁

in which R and R₁ represent alkyl (including cycloalkyl) groups containing at least 5 carbon atoms each or aromatic groups such as phenyl and tolyl, with the proviso that when R is phenyl R₁ may represent any alkyl group, and are for use in small amounts - specified in the claims as from ½ to 7% - in lubricant compositions. The heaviest of the "high molecular weight" sulphides disclosed in US-A-2 110281 is too volatile, with a boiling point of 296°C, to be used as a base oil alone without a carrier hydrocarbon.

Japanese Patent Specification JO-1132 557-A abstracted by Derwent as 89-195642/27 discloses organic sulphides of the formula R-S-R in which each R is an aliphatic or aromatic group as an extreme-pressure lubricating oil and lubricant for magnetic display medium. The exemplified dilauryl sulphide is however solid at ambient temperature and therefore is unsuitable as a lubricating oil for non-specialist large-scale industrial use such as automotive use or other high volume industrial lubricant use.

International Patent Specification No. WO 89/12670 discloses sulphur adducts of high viscosity index unsaturated polyalphaolefins for use both as base fluid and lubricant additive, which have been prepared by contacting elemental sulphur with polyalphaolefin, itself prepared by polymerisation using chromium catalysis. Such sulphurisation would lead to sulphur bonding between the prepared polymers, i.e. to double the size of molecule. The specification is silent as to the physical properties of the adducts prepared. The exemplified starting polymers have a kinematic viscosity at 100°C of at the lowest 5.1 mm²/s but generally much higher at from 12 to 500 mm²/s. The sulphur adducts, which combine such base oils, can be expected to have even higher viscosities.

In trying to reproduce the sulphurisation technique of WO 89/12670 with internal linear olefins, it has not yet been possible to prepare suitable sulphur adducts.

The present invention provides a lubricating oil composition comprising as a base fluid a compound of the general formula 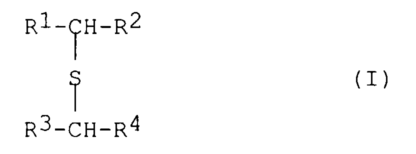 in which
R¹, R², R³ and R⁴, which may be the same or different, each represents an unsubstituted or substituted straight-chain alkyl radical optionally interrupted by one or more hetero atoms, and R⁴ alternatively may represent a hydrogen atom, such that each group R¹-CH-R² and R³-CH-R⁴ is a chain having from 5 to 31 chain atoms, the number of chain atoms in the group R¹-CH-R² being greater than or equal to the number of chain atoms in the group R³-CH-R⁴, and the total number of carbon atoms in the compound being in the range of from 16 to 70, preferably from 20 to 50.

The dialkyl sulphides of formula I combine good oxidation stability with high viscosity index (VI), low viscosity, low volatility and low pour point and can be used as an excellent lubricant base fluid either neat or as a blend with a compatible mineral or synthetic lubricating oil. The size and nature of the two alkyl chains and the total size of the sulphide molecule is critical in providing compounds of a suitably liquid nature to act as a lubricant oil. Compounds that are closely related structurally but lie outside the carbon atom limits noted, are solid and therefore unsuitable for use as a lubricant base fluid.

It is preferred that the compounds of formula I are those that have a kinematic viscosity at 100°C in the range of from 2.0 to 7.0 mm²/s, preferably 3.0 to 5.0 mm²/s, especially 3.5 to 4.5 mm²/s. Of such dialkyl sulphides, it is preferred that the size of the compound is such that there is a maximum number of carbon atoms in the range of from 20 to 40. Especially preferred are such compounds in which the group R¹-CH-R² is an uninterrupted alkyl chain having from 10 to 22 carbon atoms and the group R³-CH-R⁴ is an uninterrupted alkyl chain having from 10 to 16 carbon atoms.

In certain preferred compounds the group R¹-CH-R² is identical to the group R³-CH-R⁴. In other preferred compounds R⁴ represents a hydrogen atom.

The alkyl radicals R¹,R², R³ and R⁴, are predominantly straight chain radicals. They may be substituted by small substituents which will not contribute highly to the size of the molecule, e.g. will not take the total number of carbon atoms over 70, nor detract from the inherent lubricant properties of the compounds of formula I. Suitable substituents are C₁₋₂₀ alkyl, phenyl, (C₁₋₂₀ alkyl)phenyl, C₁₋₂₀ alkoxy, (C₁₋₂₀ alkoxy) carbonyl, C₁₋₂₀ alkylamino, di-C₁₋₂₀-alkylamino, and C₁₋₂₀ alkylthio groups. If present, the alkyl group or moiety in such substituent groups suitably has from 1 to 10 carbon atoms, usefully 1 to 4 carbon atoms. Preferably, however, the alkyl radicals, R¹, R², R³ and R⁴, are unsubstituted.

Hetero atoms should be understood to be oxygen, sulphur or nitrogen atoms. Normally only 1 to 3 hetero atoms would be present in an R¹-CH-R² and/or R³-CH-R⁴ chain. Where a nitrogen atom forms part of the chain, this may be either as an -NH- group or as an -NR- group in which R is C₁₋₂₀ alkyl, preferably C₁₋₁₀ alkyl, especially C₁₋₄ alkyl.

The dialkyl sulphides may suitably be prepared by reacting linear alpha or linear internal olefins with hydrogen sulphide or a substituted or unsubstituted alkanethiol (2 moles olefin:1 mole H₂S or 1 mole olefin:1 mole thiol) in the presence of an acidic solid catalyst, for example an alumino silicate, zeolite, beidellite, montmorillonite clay or molecular sieve. Useful catalysts include macromolecular sulphonic resins, e.g. Amberlyst A15 ("Amberlyst" is a trade name) from Aldrich Chemical Co. or Rohn and Haas Co., acid clays, such as Fitrol 24 ("Fitrol" is a trade name) or Fulcat 22B, or zeolites having a high silicon to aluminium ratio (e.g. zeolite beta). Other suitable catalysts include natural and synthetic pillared clays, e.g. pillared beidellite acid, and phosphoric acid on silica. The reaction temperature is suitably in the range of from 50 to 300°C, preferably from 130 to 200°C. The optimum reaction temperature is dependant on the catalyst used, therefore the choice of temperature, or temperature range, should be such as to maximise the effectiveness of the catalyst in use. When using hydrogen sulphide in the process, it is advisable to keep free water in the reactor to a minimum to minimise corrosion problems.

It is also possible to obtain the useful dialkyl sulphides of the general formula I by reacting linear alpha or linear internal olefins with hydrogen bromide and then with an alkali metal sulphide, e.g. sodium sulphide.

Alphaolefins are readily available commercially, eg alpha olefins obtained from the Shell Higher Olefin Process (SHOP). Internal olefins are either known and commercially available, for example docos-11-ene, or are preparable by known techniques. One convenient source of internal olefin feedstock is the isomerisation of alpha olefins, e.g. in processes such as the Shell Higher Olefin Process. When a pure internal olefin is used, the double bond will form the site of linkage to the sulphur atom; where isomerised alpha olefin is used which contains a mixture of internal olefins, then the site of the sulphur link may vary from compound to compound. It has been found that with the above preparation process, using a mixture of olefins as feedstock, e.g. C₁₈H₃₆ olefin, the bond to the sulphur atom occurs randomly between the C₂ and the C₉ carbon atom in the olefinic chain with a distribution on a statistical basis.

The preparation processes described in European Patent Specification No. 359874 A, European Patent Specification No. 82 289 B, British Patent Specification No. 1 188 036, and U.S. Patent Specification No. 2 610 981, may also be employed.

The alkanethiols used to prepare compounds of formula I are also readily available or preparable by known techniques.

It is possible that by the process routes given above, the dialkyl sulphide oil produced also contains minor (of the order of 10% by weight or less) impurities, for example dimerised but non-sulphurised olefins.

Owing to their favourable physical characteristics, the compounds of formula I can be used per se as lubricants. The compounds of formula I can be mixed with other lubricants such as mineral or synthetic oils. When in such blend form, the compound of formula I is suitably present in an amount greater than 7% by weight of total base fluid, preferably greater than 10% by weight, especially in an amount in the range of from 10 to 30% by weight, usefully 10 to 20% by weight, of total base fluid. When used in such blends, the compounds of formula I show the benefit of imparting improved cleanliness through reduced deposit formation, in addition to imparting increased oxidation resistance to conventional base oil.

The lubricating oil compositions of the present invention are suitable for use in a large number of non-specialist industrial applications, for example as lubricants for air and rotary compressors, and gas turbines, and as hydraulic fluids and industrial gear oils. They may also be used, with conventional thickening agents, as industrial greases. Further, the lubricating oil composition can be used in drilling mud for drilling oil or gas wells.

In such applications, additives invariably are useful in ensuring optimal benefit and known enhanced action of a lubricant; often additive packages are tailored for the specific application envisaged. Conventional additives that may be mentioned are extreme pressure additives, antiwear additives, antioxidants, rust or corrosion inhibitors, zinc dithiophosphates, yellow metal passivators, antifoaming agents, demulsifiers, dispersants, detergents and pour point depressants. Any or a combination of these additives may be utilised depending on the industrial application. The concentration of each additive type will depend on the application but generally a component amount in the range of from 0.001 to 5.00 %, and possibly to 10%, by weight is utilised.

Suitable additives with which the compounds of formula I may be used for engine oil application, may include one or more extreme pressure/antiwear agents, for example zinc salts such as zinc dialkyl or diaryl phosphorodithioates (at a concentration giving from 0 to 0.15% w/w phosphorus in the lubricant); one or more overbased metal-containing detergents such as calcium or magnesium alkyl salicylates or phenates, or alkylarylsulphonates (present at total detergent metal concentration in the lubricant from 0 to 2% w/w); one or more ashless dispersant additives such as reaction products of polyisobutenyl succinic anhydride and an amine or ester (present at total dispersant active matter concentration in the lubricant from 0 to 10% w/w); optionally one or more primary antioxidants, for example hindered phenols or amines (present at concentrations in the lubricant from 0 to 5% w/w). Other supplementary additives, for example antirust or friction-modifying additives may optionally be present. Viscosity Index improving polymers may optionally be present at polymer concentrations from 0 to 10% w/w. Pour point depressing additives may optionally be present at concentrations from 0 to 5% w/w.

The dialkyl sulphides may be used as a blend with the balance of base oil being of mineral or synthetic origin.

Base oils of mineral origin may be mineral oils, for example produced by solvent refining or hydroprocessing. Base oils of synthetic origin may typically be mixtures of C₁₀₋₅₀ hydrocarbon polymers, for example liquid polymers of alpha-olefins. They may also be conventional esters, for example polyol esters. The base oil may also be a mixture of these oils. Preferably the base oil is that of mineral origin sold by the Royal Dutch/Shell group of Companies under he designations "HVI" or, most preferably, the synthetic hydrocarbon base oils sold by the Royal Dutch/Shell Group of Companies under the designation "XHVI" (trade mark). Mixtures with polyol esters and other commercial base fluids are also suitable.

Base oils utilising the dialkyl sulphides of formula I are useful as industrial lubricants, and find especial use as engine lubricants, particularly as crankcase lubricants.

The following Examples illustrate the invention.

### Examples 1 to 12

### Preparation of Dialkyl Sulphides

### General Process Route A (olefin plus alkanethiol)

To prepare the dialkyl sulphide, equimolar quantities of fully isomerised linear olefin (made from the isomerisation of linear alpha olefin over Na/K on alumina catalyst) and alkyl thiol were reacted in the presence of the acidic solid catalyst Fitrol 24 in the amount of 5% m/m based on total charge, at a temperature of 160°C over a period of 24 hours. Purification by wiped film evaporation gave the product in 81% yield with a selectivity of >95%.

### General Process Route B (selective dimerisation of olefin with H₂S)

The olefinic feed was pumped into a 3/4-inch internal diameter reactor, filled with 40 ml of an acid catalyst, ground and sieved to 0.35-0.85 mm, at a rate of 10 to 20 g/h and mixed with pure, liquid hydrogen sulphide which is admitted through a Brooks flow-controller at 2-3 Nl/h generally under a pressure of 10 bar. The mixture was fed to a continuous feed electrically-heated reactor (liquid space velocity 0.5 or 0.25 h⁻¹, gas rate 100 Nl/kg of feed) where reaction took place. The liquid product was collected and the dialkylsulphide oil obtained by distillation of the liquid product in a Vigreux column under reduced pressure (2 mmHg) to remove all the unreacted olefins and intermediate mercaptan. To determine chemical structure, analysis by ¹³C NMR was carried out.

### Examples 1 to 6, C1 and C2

Using the above general process routes a number of dialkylsulphides were prepared. Details of the compounds prepared are given in Table 1 below; details of starting materials and, for the process B route compounds, catalysts are given immediately below in Tables A & B.

**Table A**

| Compound of Ex. No. | Starting Materials |
|---|---|
| C1 | fully isomerised C_{13/14} SHOP olefin; hexadecyl-1-thiol |
| C2 | fully isomerised C_{13/14}SHOP olefin; octadecyl-1-thiol |
| 1 | docos-11-ene; decane-1-thiol |
| 2 | fully isomerised C_{20/22} SHOP olefin; decane-1-thiol |
| 3 | fully isomerised C_{20/22} SHOP olefin; dodecyl-1-thiol |
| 4a & b | fully isomerised C₁₈ SHOP olefin; dodecyl-1-thiol |
| 5 | fully isomerised C₁₈ SHOP olefin; tetradecyl-1-thiol |

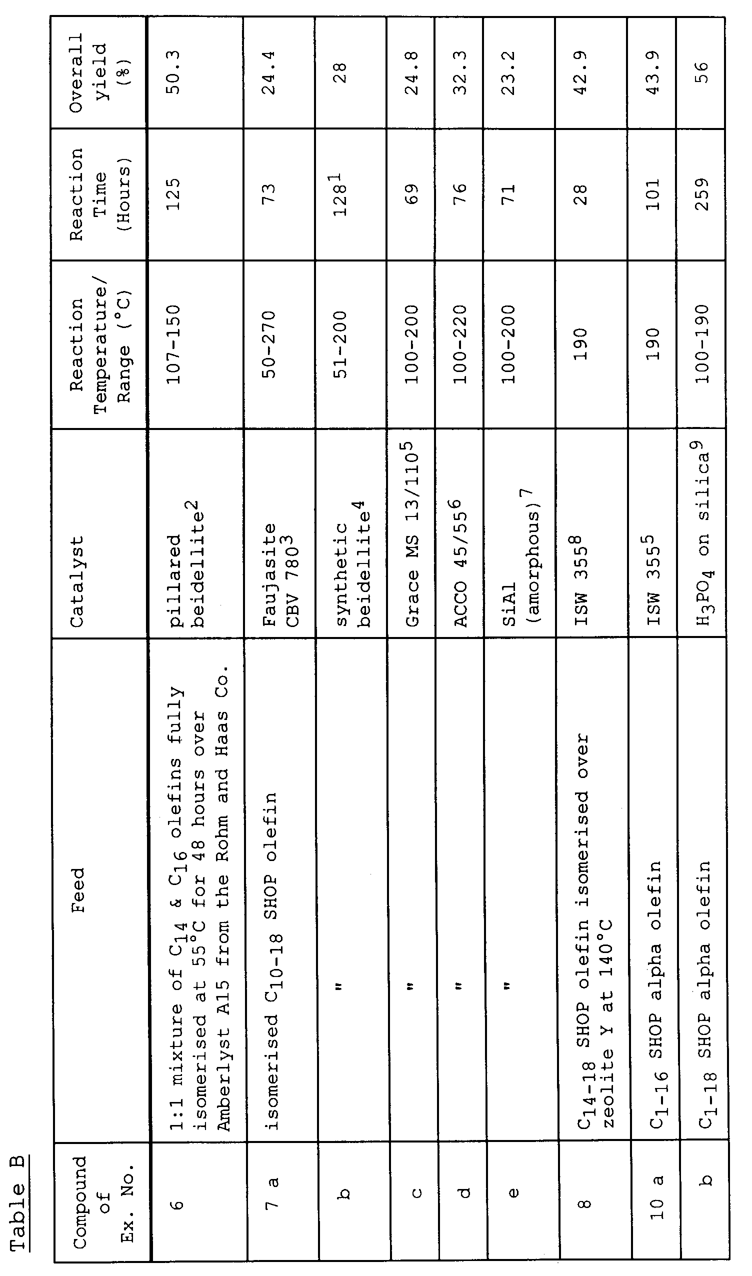

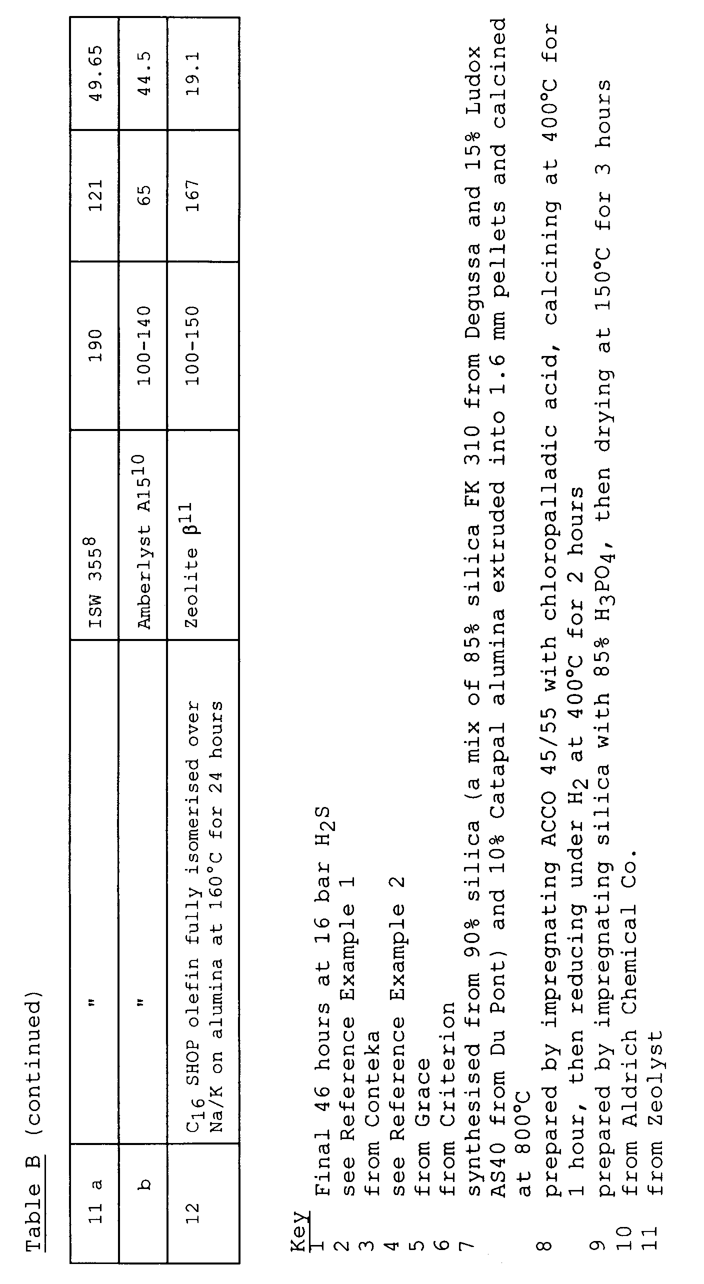

### Reference Example 1

### Preparation of Synthetic Beidellite

a) Catapal alumina (13.3g), Aerosil silica (16.84 g) and a mixture of sodium fluoride (1.97g) and hydrogen fluoride (1.31g) were dissolved in water, then contacted with Hydrogel T and the whole was autoclaved at 220°C for 7 days to give fluorided sodium beidellite.
b) This was then contacted with an ammonium nitrate solution (1 mol/l) twice, the first time overnight and the second for 2 hours. The resulting beidellite was washed three time, dried overnight at 70°C and finally calcined for 4 hours at 600°C to give the synthetic beidellite catalyst.

### Reference Example 2

### Preparation of Synthetic Pillared Beidellite

Fluorided sodium beidellite (200 g) prepared as in Reference Example 1a was stirred into 5 litres of distilled water at 50°C and subsequently stirred in 4 litres of a solution of chlorhydrol (0.87 mol/l) at 50°C for 4 hours. After washing and calcining for 2 hours at 350°C, the beidellite was contacted twice with 2N ammonium nitrate solution and then washed 3 times. Calcining for 2 hours at 500°C gave the synthetic pillared beidellite catalyst.

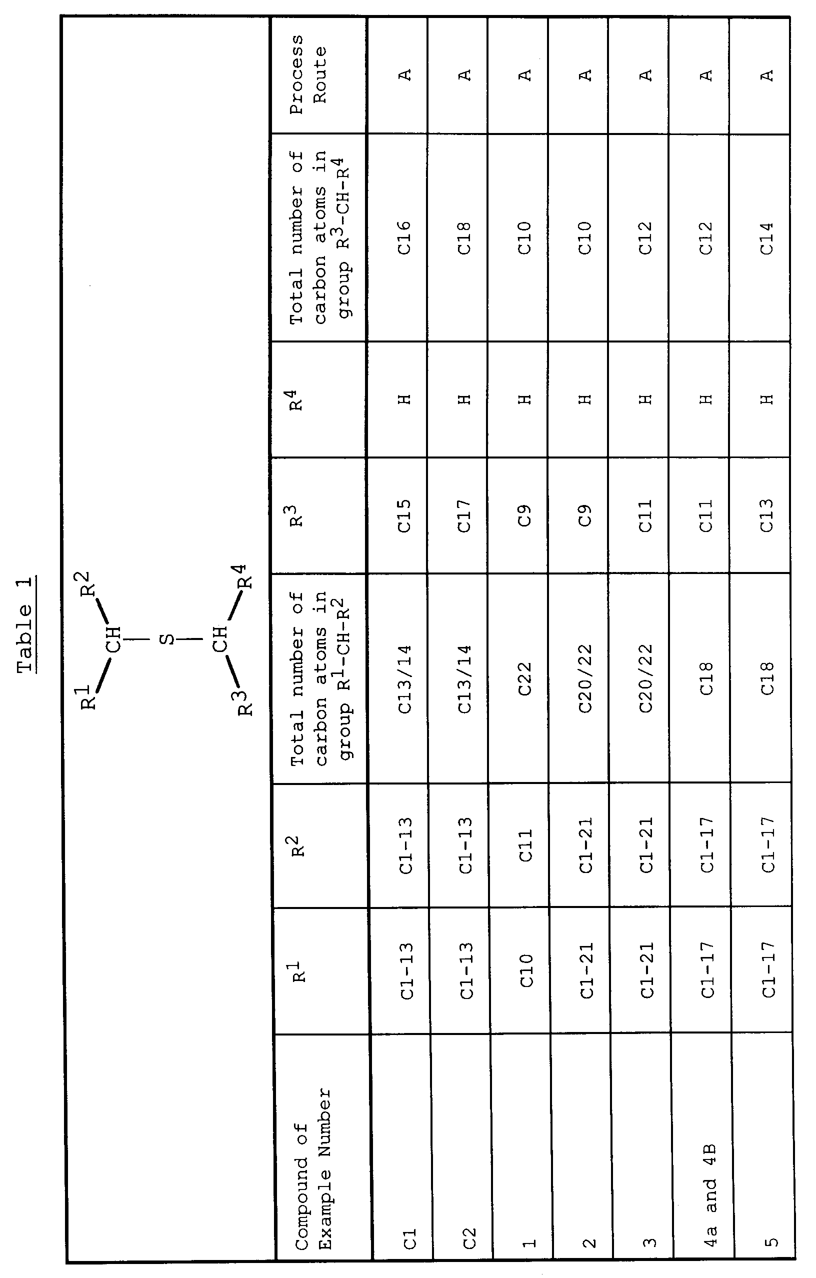

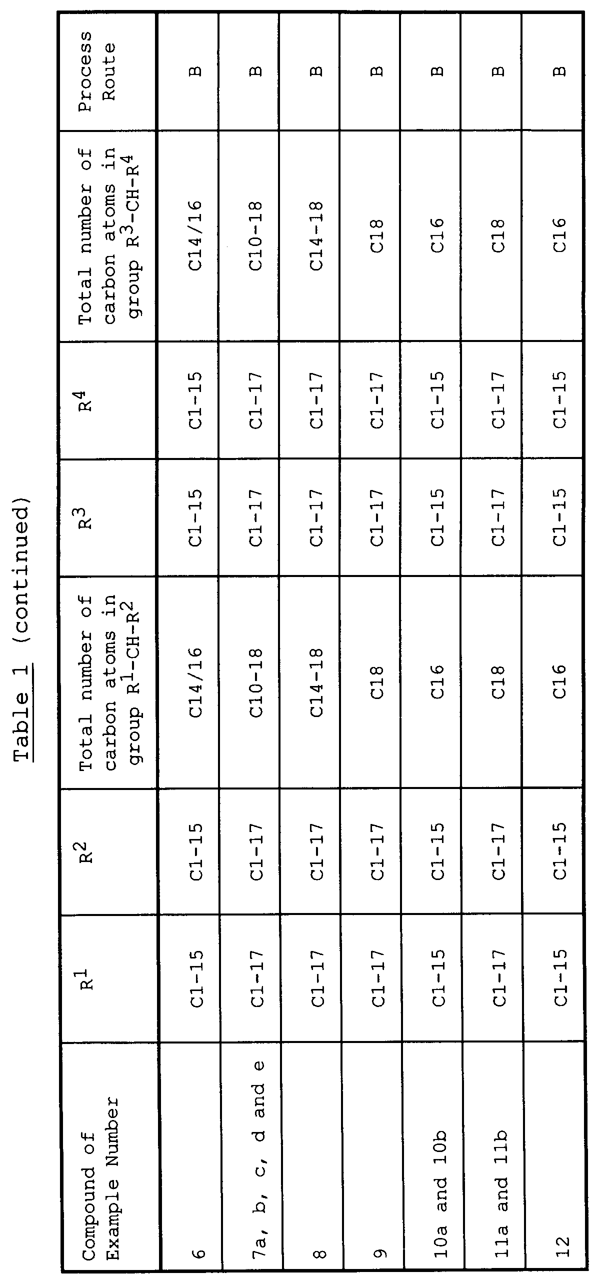

The physical properties of the compounds of Examples 1 to 12 were evaluated and are given in Table 2 below.

**Table 2**

| Cpd of Ex. No. | Vk 100 (mm^{2/}s) | VI | Pour Point (°C) | Volatility weight % loss (NOACK) | Volatility weight % loss (TGA) | Physical State at ambient temperature | Yield (%) |
|---|---|---|---|---|---|---|---|
| C1 | 5.8 | >300 | +34 | | | Solid | 81 |
| C2 | 15.3 | - | +45 | | | Solid | 81 |
| 1 | 4.18 | 175 | -18 | | 8.5 | Oil | 81 |
| 2 | 4.34 | 152 | +3 | | 10.2 | Oil | 81 |
| 3 | 4.51 | 173 | -3 | | 5.5 | Oil | 81 |
| 4a | 3.91 | 164 | -12 | 5.6 | 6.5 | Oil | 81 |
| 4b | 3.91 | 161 | -12 | 3.7 | 5.4 | Oil | 81 |
| 5 | 4.46 | 174 | +3 | | 3.1 | Oil | 81 |
| 6 | 3.92 | 139 | -24 | 10.9 | 9.2 | Oil | 81 |
| 7a | 4.07 | 125 | -30 | 12.6 | | Oil * | 24.4 |
| 7b | 4.12 | 128 | -26 | 10.1 | | Oil * | 28 |
| 7c | 4.03 | 131 | -24 | 9.6 | | Oil * | 24.8 |
| 7d | 3.79 | 135 | -21 | 9.2 | | Oil * | 32.3 |
| 7e | 3.81 | 126 | -24 | 8.7 | | Oil * | 23.3 |
| 8 | 4.19 | 138 | -13 | 6.2 | | Oil | 32.8 |
| 9 | 5.6 | 159 | +3 | 3.8 | | Oil | 42.9 |
| 10a | 4.42 | 147 | -12 | 6 | | Oil | 43.9 |
| 10b | 4.41 | 149 | -12 | 3.1 | | Oil | 56 |
| 11a | 4.9 | 121 | +10 | | | Oil | 49.65 |
| 11b | 5.36 | 161 | +7 | 3.1 | | Oil | 44.5 |
| 12 | 4.15 | 143 | -18 | 7.7 | | Oil | 19.1 |

| | | | | | | | |
|---|---|---|---|---|---|---|---|
| * wax precipitation on storage | | | | | | | |

The Kinematic Viscosity at 100°C (Vk100) of an oil is measured under low shear conditions (gravity). The viscosity index (VI) is a number indicating the effect of change of temperature on the Vk. A high VI signifies relatively small change of Vk with temperature, which is desirable. The Vk100 was determined according to ASTM D 445-94; the VI was calculated according to ASTM D 2270-86.

The pour point is defined at the lowest temperature at which an oil will flow when cooled at a specific rate. In crankcase use, a low pour point is desirable. Pour point has been determined according to ASTM D 97-87.

The volatility has been measured either by the Noack method or by ThermoGravimetric Analysis (TGA).

The Noack method (Test Method CEC-L-40-T-87) measures the evaporative loss from an oil held at 250°C for 1 hour.

TGA is Test Method IP 393/91. Weight loss up to 262°C is determined from the record of mass loss as a function of temperature in a suitable thermogravimetry instrument run at a constant heating rate of 10°C/min. from 40°C to 550°C under flowing nitrogen. This measurement has been shown (based on a limited correlation exercise) to provide an indication of the result to be expected by the Noack method. Low volatility is desirable.

The compounds of Examples 1 to 7 have a viscosity, Viscosity Index, pour point and volatility of a level which is eminently suitable for lubricant basestock oils. The kinematic viscosity of these compounds provide highly advantageous free flowing properties to the oils.

### Example 13

Experiments were conducted to evaluate the usefulness of the oils of Examples 1, 4a and 6 as components of a lubricant basestock blend in varying proportions, by measuring isothermal oxidation stability.

The oxidation stability of the oils was evaluated by differential scanning calorimetry (DSC). DSC measures the differential heat flow (sample vs reference) when a sample of oil in a small pan, and a reference (empty pan) are heated under an oxygen or air atmosphere in a closed cell. Suitable apparatus is commercially available from a number of suppliers. Since oxidation of oils is exothermic, DSC may be used to monitor the oxidation rate of oils. Typically a 2 mg sample of oil is used in an open aluminium pan.

The temperature is held constant at a selected temperature, e.g. 220°C during the experiment. The cell atmosphere was 30 bar oxygen, and the gas flow rate 60 ml/min. If the oil contains primary antioxidant, there is an induction period (a period in which the oxidation rate is being controlled by antioxidant so that little heat output is observed) before rapid oxidation marked by a rapidly increasing exotherm occurs. The induction period is defined by the intersection of the tangent at the steepest part of the increasing exotherm and the baseline extrapolated from earlier time, on a plot of power vs time. Higher values correspond to enhanced oxidation stability.
1) The oils were tested as a fully formulated gasoline engine oil, A, and a fully formulated diesel engine oil, B. Formulation A contained 0.05% w/w phosphorus and had detergent concentration of 9 mmol/kg. Formulation B contained 0.01% w/w phosphorus and 41 mmol/kg detergent.
The results of the isothermal DSC tests are given in Table 3 below; the data are given as induction periods, in minutes, at 220°C.

**Table 3**

| Compound of Ex. No. | Concentration of dialkylsulphide in formulation | | | | | |
|---|---|---|---|---|---|---|
| | 0 | | 10 | | 20 | |
| | A | B | A | B | A | B |
| 1 | 7 | 6.3 | 19 | 12.2 | 14 | nt |
| 4a | 7 | 6.3 | 19.2 | 13.9 | 12.8 | nt |
| 6 | 7 | 6.3 | 15.9 | 14.6 | 15.8 | nt |
| nt : not tested | | | | | | |

For reference a 10% w/w blend of a commercial pentaerythrityl ester showed a value of 7.6 in Formulation A and 5.3 in Formulation B. Thus it can be seen that incorporating dialkylsulphide into a gasoline or diesel engine oil formulation yields significantly enhanced oxidation stability in comparison to a conventional ester oil.
2) The oil of Example 4b was tested by blending with a reference oil to give a fully formulated engine oil which had a 20 mmol/kg detergent content and a 1.3% ash level. Isothermal DSC values were obtained from the reference oil alone and from blends of 10% by weight of dialkyl sulphide with reference oil and similar blends of commercial polyol ester oils, PRIOLUBE 3939 (Polyol A) and PRIOLUBE 3970 (Polyol B) both from Unichema, [PRIOLUBE is a trade name] all having the same detergent and ash contents.
The results are given below in Table 4 as DSC induction periods in minutes at 200°C and at 210°C.

**Table 4**

| Oil | Isothermal DSC | |
|---|---|---|
| | Min (200°C) | Min (210°C) |
| Reference oil | 14.4 | 8.2 |
| +10% Oil of Ex. 4b | 18.0 | 9.8 |
| +10% (Polyol A) | 16.1 | 8.8 |
| +10% (Polyol B) | 12.9 | 8.1 |

From Table 4, it can be seen that use of the dialkyl sulphide as ancillary base oil significantly enhances the oxidation stability of the reference synthetic hydrocarbon oil. Polyol esters are known to have increased oxidational stability with respect to hydrocarbon base fluids, but at an equivalent blend amount imparted little or no stability benefit to reference oil.

### Example 14

Using the same synthetic hydrocarbon base fluid as the predominant base oil, lubricant formulations were prepared containing 10% by weight of the oil of Example 4b, and additive packages suitable for use in diesel engines. The deposit-forming tendencies of the compositions were evaluated using the Caterpillar micro oxidation test, an extended Wolf strip test and the PSA Panel Coker test.
a) The Caterpillar Micro Oxidation test, AutoResearch Laboratories Incorporated Method, is a laboratory bench text used to predict the lubricant deposit-forming tendencies under thin film conditions. Samples are subjected to 230°C under air with a set flow rate to oxidize oil and cause deposit-formation on a pre-weighed metal coupon. Deposits are then weighed and the accumulation of deposits determines the induction time - the time in minutes for an oil to cause a specified level of deposit. Naturally higher values are desirable.
   The lubricant composition of Example 13 (containing 10% by weight of the oil of Example 4b) gave an induction period of 195 minutes against a period of 115 minutes for the reference oil. In a 40 mmol/kg soap-containing 90:10 (reference oil to oil of Example 4b) lubricant composition, an induction period of 259 minutes was obtained as against 196 minutes for the reference oil.
b) In an extended Wolf Strip test (based on method DIN 51392), an inclined hot plate test, the lubricant under test is circulated at 50 ml/min. for 24 hours at 280°C over a metal test strip that is 8° declined against the horizontal. The weight of deposit remaining on the test strip is recorded at the end of the test. A low deposit is desirable. The mean of three experiments for each oil is calculated. The lubricant composition of Example 13 gave a mean weight of deposit of 58 mg, and the reference oil alone gave a mean deposit weight of 81 mg.
c) The PSA Panel Coker test is an inclined hot plate test performed at 288°C, where the lubricant is circulated for 24 hours. A specific demerit rating is established by rating the amount (area) and type of deposit produced (smooth, layered, blistered or flaked carbons, varnish and sludges). The total results (demerit) are added and then divided by area (cm²) to obtain specific demerit. A low demerit rating is advantgeous.

The lubricant composition of Example 13 gave a demerit rating of 2.69 whereas the reference oil gave a rating of in excess of 4.

All these tests show that a base oil blend incorporating a dialkyl sulphide of the present invention has a significantly improved cleanliness over the hydrocarbon base oil alone.

### Example 15

An MWM-B Diesel Engine test (pursuant to test method CEC L-12-A-76) was conducted to evaluate the lubricant composition of Example 13 as a crankcase oil in respect of piston deposits and ring sticking. The higher the piston rating, the better the composition's performance. Table 5 below shows that the dialkyl sulphide base oil significantly improves the cleanliness rating in the top groove (i.e., groove 1) as compared with the reference oil as sole base oil.

**Table 5**

| Region of Piston | Lubricant Composition | |
|---|---|---|
| | Reference Oil Single | Composition of Ex. 7 mean of 2 |
| Groove 1 | 0.65 | 43.72 |
| Land 2 | 64.3 | 64.82 |
| Groove 2 | 94.9 | 83.17 |
| Land 3 | 93.0 | 83.37 |
| Groove 3 | 100.0 | 99.65 |
| Mean | 70.57 | 74.95 |
| undercrown | 65.0 | 68.5 |

These results demonstrate that the improved cleanliness identified in the laboratory tests of Example 14, is also found in use.

## Claims

1. A lubricating oil composition comprising as a base fluid a compound of the general formula 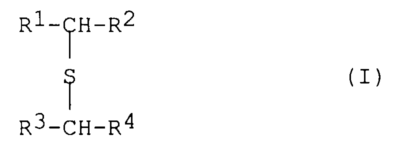 in which
R¹, R², R³ and R⁴, which may be the same or different, each represents an unsubstituted or substituted straight-chain alkyl radical, optionally interrupted by one or more hetero atoms, and R⁴ alternatively may represent a hydrogen atom, such that each group R¹-CH-R² and R³-CH-R⁴ is a chain having from 5 to 31 chain atoms, the number of chain atoms in the group R¹-CH-R² being greater than or equal to the number of chain atoms in the group R³-CH-R⁴, and the total number of carbon atoms in the compound being in the range of from 16 to 70.

2. A lubricating oil composition as claimed in claim 1, wherein the compound of general formula I has a kinematic viscosity at 100°C in the range of from 2.0 to 7.0 mm²/s.

3. A lubricating oil composition as claimed in claim 2, wherein the compound of formula I has a kinematic viscosity at 100°C in the range of from 3.5 to 4.5 mm²/s.

4. A lubricating oil composition as claimed in claim 3, wherein the total number of carbon atoms in the compound of formula I is in the range of from 20 to 40.

5. A lubricating oil composition as claimed in claim 4, wherein, in the compound of formula I, the group R¹-CH-R² is an uninterrupted alkyl chain of from 10 to 22 carbon atoms and the group R³-CH-R⁴ is an uninterrupted alkyl chain of from 10 to 16 carbon atoms.

6. A lubricating oil composition as claimed in any one of claims 1 to 5, wherein the compound of formula I is present in an amount greater than 7% by weight of total base fluid.

7. A lubricating oil composition as claimed in claim 6, wherein the compound of formula I is present in an amount in the range of from 10 to 30% by weight of total base fluid.

8. A lubricating oil composition as claimed in claim 1, wherein the compound of formula I is that described in any one of Examples 1 to 12 herein.

9. Use as a lubricant base fluid of a compound of general formula I as defined in any one of claims 1 to 8.
